# EUROPÄISCHE PATENTANMELDUNG

(11) **EP 4 654 407 A1**
(43) Veröffentlichungstag der Anmeldung: **26.11.2025**
(21) Anmeldenummer: 25177161.4
(22) Anmeldetag: 19.05.2025
(51) Int. Cl.: H02G 3/22

(54) **DURCHFÜHRUNG FÜR EINEN LÄNGLICHEN GEGENSTAND**

(30) Priorität: 21.05.2024 DE 102024114098
(71) Anmelder: icotek project GmbH & Co. KG, 73569 Eschach (DE)
(72) Erfinder: Ehmann, Valentin, 73563 Mögglingen (DE); Ehmann, Bruno, 73527 Schwäbisch Gmünd (DE)
(74) Vertreter: Dr. Weitzel & Partner

(57) **Zusammenfassung**

Die Erfindung betrifft eine Durchführung für einen länglichen Gegenstand, mit einem Rahmen und wenigstens einer Dichttülle, wobei eine Außenkontur der Dichttülle Elemente zur formschlüssigen Anlage an dem Rahmen aufweist, wobei die Dichttülle wenigstens eine Durchgangsöffnung zur Aufnahme des länglichen Gegenstandes oder einem Blindstopfen aufweist, und wobei in der Durchgangsöffnung mehrere zylindermantelförmige Materialschichten konzentrisch zueinander angeordnet sind.

Die erfindungsgemäß Durchführung ist dadurch gekennzeichnet, dass der Rahmen teilbar ausgebildet ist, und dass die Dichttülle und die zylindermantelförmigen Materialschichten geschlitzt ausgeführt sind, sodass ein Schlitz jede der Durchgangsöffnungen mit einer benachbarten Durchgangsöffnung oder der Außenkontur verbindet.

## Beschreibung

Die Erfindung betrifft eine Durchführung für einen länglichen Gegenstand nach der im Anspruch 1 näher definierten Art.

Bezüglich gattungsgemäßer Durchführungen kann beispielsweise auf die EP 2 394 340 B1 verwiesen werden. Diese zeigt unter dem Titel "Dichtungsanordnung" ein Dichtungssystem für Kabel- und Rohrdurchführungen mit einem einteiligen Rahmen, in dem verschiedene hälftig geteilte Dichttüllen eingelegt werden, welche jeweils eine Durchgangsöffnung zur Aufnahme des länglichen Gegenstandes, also des Kabels oder der Rohrleitung, aufweisen. Um die Dichttüllen einfach an den Durchmesser des entsprechenden länglichen Gegenstands anpassen zu können ist es dabei vorgesehen, dass einzelne zylindermantelförmige Materialschichten vorgesehen sind. Diese können dann in jeder Halbschale der Dichttülle eine nach der anderen so lange entfernt werden, bis die Durchgangsöffnung dem Durchmesser des länglichen Gegenstands entspricht. Die beiden Hälften der Dichttülle werden dann über den länglichen Gegenstand zusammengelegt und in dem Rahmen verpresst. Die Dichttüllen weisen hier außerdem Elemente zur formschlüssigen Anlage an dem Rahmen auf, beispielsweise Vorsprünge in der Mitte oder am jeweiligen Ende der Dichttülle in Laufrichtung des länglichen Gegenstands gesehen. Diese greifen in entsprechende Elemente des Rahmens ein beziehungsweise wirken mit der Außenkontur des Rahmens so zusammen, dass die Dichttüllen im Falle eines Zugs an dem länglichen Gegenstand nicht oder nicht so leicht aus dem Rahmen herausgezogen werden.

Ergänzend zu der genannten EP-Schrift kann außerdem auf weitere Anmeldungen zu diesem Thema und vom selben Anmeldetag verwiesen werden, beispielsweise die EP 2 394 339 B1 oder die WO 2010/090582 A1. Ferner kann auf die WO 2005 / 057 749 A1 der selben Anmelderin verwiesen werden.

Bezüglich Kabeleinführungen, welche primär zur Einführung von Kabeln in Schaltschränke von Werkzeugmaschinen genutzt werden, kann ferner auf die US 7,806,374 B1 oder die DE 10 2020 208 235 A1 der Anmelderin verwiesen werden.

Aus dem Bereich der sogenannten Hauseinführungen ist außerdem die WO 2009 / 146 761 A1 bekannt. Dabei wird eine sogenannte Ronde aus Gummi zwischen zwei in Laufrichtung der länglichen Gegenstände vor und hinter der Ronde liegende Rahmenteile in Laufrichtung verpresst. Die sich verformende Ronde dichtet den Aufbau dann gegenüber eine Hauswand und gegenüber den Kabeln ab. In der WO 2009 / 146 761 A1 sind dabei einzelnen seitlich geschlitzte Schichten zur Anpassung an den Durchmesser der eingeführten Leitungen vorgesehen.

Die Aufgabe der hier vorliegenden Erfindung besteht nun darin eine verbesserte Vorrichtung zur Abdichtung eines länglichen Gegenstands in Form einer Durchführung zu schaffen, welche einfach und effizient in ihrer Handhabung ist.

Erfindungsgemäß wird diese Aufgabe durch eine Durchführung mit den Merkmalen im Anspruch 1, und hier insbesondere im kennzeichnenden Teil des Anspruchs 1, gelöst. Vorteilhafte Ausgestaltungen und Weiterbildungen ergeben sich aus den hiervon abhängigen Unteransprüchen.

Bei der erfindungsgemäßen Durchführung ist es so, dass diese einen Rahmen und wenigstens eine Dichttülle aufweist, welche mehrere zylindermantelförmige Materialschichten umfasst, die konzentrisch zueinander um eine Durchgangsöffnung oder einen Blindstopfen der Dichttülle angeordnet sind.

Die erfindungsgemäße Besonderheit liegt nun darin, dass der Rahmen selbst teilbar ausgebildet ist. Dies vereinfacht das Handling enorm, da die Dichttüllen sehr einfach und effizient beispielsweise quer zur Laufrichtung der länglichen Gegenstände in den Rahmen eingeschoben werden können. Sie halten dann durch die Elemente zur formschlüssigen Anlage in dem Rahmen und/oder an benachbarten Dichttüllen. Damit ermöglichen eine Abdichtung der Dichttüllen an ihrer Außenkontur und vor allem eine Zugentlastung des länglichen Gegenstandes in der Dichttülle bei einer in seine Laufrichtung wirkenden Kraft, da dieser zusammen mit der Dichttülle in Laufrichtung gehalten wird. Neben dem reinen Formschluss kann es die den elastischen Dichttüllen ferner zu einer reibschlüssigen Anlage der Dichttüllen an benachbarten Dichttüllen und/oder Rahmenteilen kommen, welche die Abdichtung und Zugentlastung unterstützten. Die Dichttüllen könne sich also alle entweder an dem Rahmen oder einige auch untereinander abstützen, sodass eine gute Zugentlastung gewährleistet ist. Die Dichttülle selbst und insbesondere die zylindermantelförmigen Materialschichten sind dabei geschlitzt ausgeführt, sodass der Schlitz jede der Durchgangsöffnungen mit einer benachbarten Durchgangsöffnung oder der Außenkontur der Dichttülle verbindet.

Durch diese Ausgestaltung werden mehrere entscheidende Vorteile erreicht. Einerseits wird die Dichtheit einer solchen geschlitzten Dichttülle erhöht, da die Dichttülle durch den Schlitz lediglich aufgeklappt, der längliche Gegenstand eingelegt und die Dichttülle dann wieder zugeklappt wird. Hierdurch entsteht eine deutlich bessere Anlage der Oberflächen der Dichttülle aneinander und diese können insbesondere nicht versetzt gegeneinander aufeinandergelegt werden, wie es bei hälftig geteilten Dichttüllen der Fall ist. Bereits dies erhöht die Dichtheit erheblich. Außerdem wird der Aufbau durch den quer zur Laufrichtung geteilten Rahmen beim Verschließen des Rahmens direkt in Richtung des länglichen Gegenstandes einerseits und des Schlitzes andererseits verpresst, was die Dichtheit ebenfalls steigert.

Ein weiterer ganz entscheidender Vorteil besteht außerdem darin, dass die zylindermantelförmigen Materialschichten ebenfalls geschlitzt sind. Anders als beim Aufbau im Stand der Technik, bei dem jeweils zwei Halbschalen entfernt werden müssen, um eine Durchgangsöffnung mit dem passenden Durchmesser zu erhalten, ist es bei dem erfindungsgemäßen Aufbau der Durchführung so, dass lediglich eine einzige Materialschicht herausgenommen werden muss, da diese Materialschicht nur auf einer Seite geschlitzt und deshalb im Querschnitt im Wesentlichen C-förmig und einteilig ausgebildet ist.

In der Praxis kommt es bei den Aufbauten gemäß dem Stand der Technik häufig dazu, dass in der einen Hälfte versehentlich eine andere Materialschicht entfernt wird als in der anderen Hälfte. In der Praxis führt dies dann zu einem erheblichen Problem mit der Dichtheit beziehungsweise zu der Problematik, dass ein Werker - falls er den Fehler bemerkt - eine der bereits entfernten Schichten wieder einlegen muss, um so in beiden Hälften der Dichttülle denselben Durchmesser der Durchgangsöffnung zu erhalten. Dies ist in der Praxis außerordentlich komplex und aufwändig und führt häufig zu unerwünschten Undichtheiten. Bei dem erfindungsgemäßen Aufbau, bei welchem die einzelnen Materialschichten lediglich einfach geschlitzt sind, lassen diese sich außerordentlich effizient entnehmen. Durch die einteilige Ausgestaltung der Materialschichten ist dabei sichergestellt, dass immer die gesamte Materialschicht um den gesamten Umfang der Durchgangsöffnung herum entfernt wird, sodass der Durchmesser sich also nicht wie bei zwei Hälften voneinander unterscheiden kann. Dies führt einerseits zu einer sehr einfachen und effizienten Handhabung und andererseits, zusammen mit der oben bereits beschriebenen vorteilhaften Ausgestaltung der als Ganzes einseitig geschlitzten Dichttülle, zu einer außerordentlich guten Abdichtung.

Gemäß einer sehr vorteilhaften Weiterbildung der Durchführung gemäß der Erfindung kann es außerdem vorgesehen sein, dass der Rahmen und die Elemente zur formschlüssigen Anlage der wenigstens einen Dichttülle so ausgebildet sind, dass bei geteiltem Rahmen, die wenigstens eine Dichttülle quer zur Laufrichtung des länglichen Gegenstades schubladenartig mit ihren Elementen zur formschlüssigen Anlage in korrespondierende Elemente des Rahmens einschiebbar ist. Dieses schubladenartige Einschieben in den geteilten Rahmen erfolgt dabei bevorzugt quer zur oder auch in Laufrichtung der eingelegten länglichen Gegenstände. Unter schubladenartig ist dabei ein Bewegen auf einer konstruktiv vorgegebenen Bahn in eine konstruktiv vorgegebene Endposition zu verstehen. Dies ist außerordentlich einfach und effizient. Der Rahmen kann bei quer eingeschobenen Tüllen dann beim Verschließen beispielsweise über Schrauben, Hebel, Clip-Elemente oder dergleichen so viel Druck auf die eingeschobenen Tüllen aufbauen, dass einerseits eine gute Abdichtung und andererseits eine außerordentlich effiziente Zugentlastung gewährleistet ist.

Eine weitere sehr günstige Ausgestaltung kann es dabei vorsehen, dass die zylindermantelförmigen Materialschichten als Teil der Dichttülle selbst ausgebildet sind. Sie können im Gegensatz dazu gemäß einer sehr vorteilhaften Alternative auch als eigeständiger Kern mit zylindrischem Außendurchmesser ausgebildet und in die Dichttülle eingelegt sein. Der Kern ist dann beispielsweise eingeklebt oder von dem Material der Dichttülle zumindest teilweise umspritzt ausgebildet. Er könnte alternativ oder ergänzend hierzu auch formschlüssig in der Dichttülle gehalten sein.

Eine außerordentlich günstige Ausgestaltung der erfindungsgemäßen Durchführung kann es dabei vorsehen, dass die zylindermantelförmigen Materialschichten auf zumindest einer ihrer Seiten in Laufrichtung des länglichen Gegenstandes welche der Axialrichtung der Durchgangsöffnung entspricht, besonders bevorzugt auf beiden Seiten, mit einer dünnen Schicht des Materials der Dichttülle überzogen sind. Unter "dünn" ist dabei eine Schichtdicke von weniger als 1 mm, bevorzugt weniger als 0,5 mm zu verstehen. Diese dünne Schicht gewährleistet einerseits eine geschlossene Oberfläche ohne Spalten, welche ein Eindringen von Feuchtigkeit beispielsweise durch Kapillarkräfte begünstigen würden. Andererseits sind die einzelnen Materialschichten in der Praxis typischerweise nicht unmittelbar miteinander verbunden sondern haften lediglich aufgrund ihrer Materialstruktur und ihrer schichtweisen Herstellung aneinander an. Die Abdichtung wird dann erst beim Verpressen erreicht. Ist nun jedoch die dünne Schicht auf einer oder vorzugsweise beiden Seiten vorhanden, entsteht hier zusätzlich eine Verbindung der einzelnen materialförmigen Schichten mit einer Sollbruchstelle, sodass diese, insbesondere bei der Entnahme einiger der Schichten zur Anpassung des Durchmesser der Durchgangsöffnung an den des länglichen Gegenstands, in der Dichttülle besser anhaften und nicht herausfallen können. Dies erleichtert das Handling ungemein, da bei den Aufbauten gemäß dem Stand der Technik häufig beim Entfernern einer Schicht mehrere Schichten entfernt oder zumindest in Axialrichtung der Durchgangsöffnung verschoben worden sind, welche dann erst mühsam wieder positioniert werden müssen, um den gewünschten dichten Aufbau zu erzielen. Durch die wenigstens eine dünne Schicht wird diese Problematik effizient umgangen.

Die Schichtdicke einer solchen dünnen Schicht zum Schaffen einer geschlossenen Oberfläche einerseits und zum Halten der zylindermantelförmigen Materialschichten andererseits beträgt dabei typischerweise nur wenige zehntel Millimeter und kann vorzugsweise beim Einsatz eines Kerns aus den zylindermantelförmigen Materialschichten zum Einsatz kommen, welcher anschließend von dem Material der Dichttülle entsprechend umspritzt wird. Der Aufbau ist dabei typischerweise so, dass der Kern mit den konzentrischen zylindermantelförmigen Materialschichten durch Extrusion hergestellt wird, welcher dann in ein entsprechendes Werkzeug eingelegt und von dem Material für die Dichttülle umspritzt wird. Die Materialien können dabei insbesondere dieselben Materialien oder sehr ähnliche Materialien sein.

Die Dichttülle selbst kann dabei eine im Wesentlichen rechteckige Form aufweisen, wobei die Elemente zur formschlüssigen Aufnahme in dem Rahmen an zwei gegenüberliegenden Seiten angeordnet sind. Die Dichttülle kann so formschlüssig beispielsweise gemäß der oben beschriebenen Ausgestaltung schubladenartig in den Rahmen beispielsweise zwischen Schenkeln des Rahmens und/oder Zwischenstegen des Rahmens eingeschoben werden und hält hier bereits vor dem Verschließen des Rahmens zuverlässig so fest, sodass ein Werker sehr effizient den Rahmen mit den entsprechenden Tüllen und Kabeln oder Schläuchen bestücken kann, um diesen dann einfach zu verschließen, ohne dass die Gefahr besteht, dass die Tüllen und länglichen Gegenstände sich in dem Rahmen wieder lockern und das Verschließen des Rahmens zu einer fummeligen Aufgabe machen.

Eine derartige Dichttülle kann nun gemäß einer sehr vorteilhaften Weiterbildung der erfindungsgemäßen Durchführung vollständig oder zumindest im Bereich der zylindermantelförmigen Materialschichten durch Extrusion hergestellt sei. Hierbei bieten sich verschiedene Extrusionsverfahren an. Insbesondere kann mit sehr hoher Flexibilität ein extrusionsbasierter Druckvorgang zum Einsatz kommen wie beispielsweise das unter dem Begriff SEAM (Screw Extrusion Additive Manufacturing) bekannte Verfahren.

Die Dichttülle selbst kann dabei aus einem elastischen Material mit einer Härte von weniger als 90 Shore A (gemäß ISO 48-4:2018-08) ausgeführt sein, der Rahmen selbst ist typischerweise aus einem formstabilen Kunststoffmaterial mit geringerer Elastizität und größerer Härte, insbesondere mehr als 90 Shore A, ausgeführt, insbesondere kann es sich hier um einen faserverstärkten Kunststoff handeln.

Weitere vorteilhafte Ausgestaltungen der erfindungsgemäßen Durchführung ergeben sich auch aus dem Ausführungsbeispiel, welches nachfolgend unter Bezugnahme auf die Figuren näher dargestellt ist.

Dabei zeigen:
- Figur 1: eine Ansicht einer möglichen Durchführung gemäß der Erfindung;
- Figur 2: eine erste mögliche Ausführungsform einer Dichttülle in einer dreidimensionalen Ansicht;
- Figur 3: eine Ansicht der Dichttülle gemäß Figur 2 in einer Schnittdarstellung gemäß der Linie III-III in Figur 2;
- Figur 4: eine alternative Ausführungsform der Dichttülle in einer dreidimensionalen Ansicht;
- Figur 5: eine noch weitere alternative Ausführungsform der Dichttülle in einer dreidimensionalen Ansicht;
- Figur 6: ein Kern für eine Dichttülle in einer dreidimensionalen Ansicht;
- Figur 7: eine alternative Ausführungsform einer Dichttülle mit angelegten Kern gemäß Figur 6; und
- Figur 8: eine Schnittdarstellung der Tülle aus Figur 7 gemäß der Linie VIII-VIII in Figur 7.

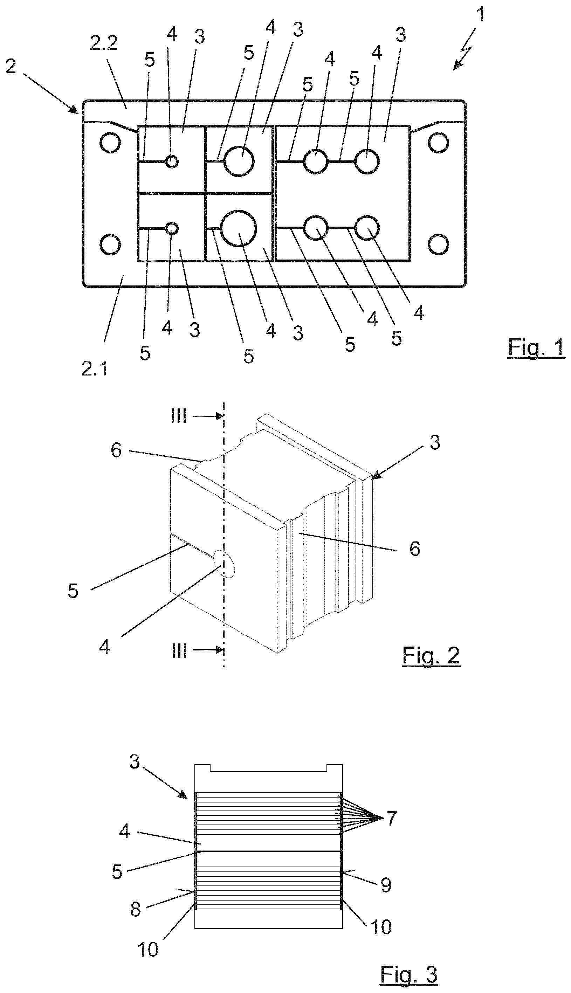

In der Darstellung der Figur 1 ist eine Durchführung für Kabel und/oder Schläuche in einer Frontansicht schematisch dargestellt. Sie besteht aus einem teilbaren Rahmen 2, welcher ein Rahmenunterteil 2.1 sowie einen Rahmendeckel 2.2 umfasst. Der Rahmendeckel 2.2 kann beispielsweise mit dem Rahmenunterteil 2.1 verschraubt sein. Auch ein Verschließen über einen Clipmechanismus, einen Hebelmechanismus oder dergleichen ist denkbar. Zentral in dem Rahmen 2 sind mehrere Kammern ausgebildet, in welchen Dichttüllen 3 aufgenommen sind. In dem dargestellten Ausführungsbeispiel sind dies vier Dichttüllen 3 mit einem Rastermaß von "1x1" und eine Dichttülle 3, in der Darstellung der Figur 1 rechts, mit einem Rastermaß von "2x2". Daneben sind selbstverständlich auch Dichttüllen 3 mit einem anderen Rastermaß denkbar, z.B. "1x2", "1x3", "3x2", "3x3" usw.. Die Dichttüllen sind hier allesamt mit einem rechteckigen beziehungsweise quadratischen Querschnitt ausgebildet. Jede der Dichttüllen 3 umfasst eine Durchgangsöffnung 4, welche über einen Schlitz 5 mit einer Außenkontur der Dichttülle 3 verbunden ist. Die rechts dargestellte größere Dichttülle 3 weist vier Durchgangsöffnungen 4 auf. Diese Durchgangsöffnungen 4 sind so ausgestaltet, dass in dem hier dargestellten Ausführungsbeispiel die beiden rechts dargestellten Durchgangsöffnungen 4 über den Schlitz 5 jeweils mit der benachbarten linken Durchgangsöffnung 4 verbunden sind. Diese ist dann jeweils über den linken Schlitz 5 mit der Außenkontur der Dichttülle 3 verbunden.

In der Darstellung der Figur 2 ist nun eine solche Dichttülle 3 nochmals erkennbar, und zwar in einer dreidimensionalen Ansicht. Dabei ist die Durchgangsöffnung 4 ebenso erkennbar wie der Schlitz 5. Die Außenkontur der Dichttülle 3 weist an ihren beiden hier links und rechts dargestellten Seitenkanten beziehungsweise Seitenflächen 6 jeweils eine Kontur mit formschlüssigen Elementen auf, welche mit korrespondierenden Elementen des Rahmens 2, und hier des Rahmenunterteils 2.1, zusammenwirken, sodass die Dichttülle 3 schubladenartig bei abgenommenem Deckel 2.2 in das Rahmenunterteil 2.1, in der Darstellung der Figur 1 von oben nach unten, eingeschoben werden kann. Durch den Formschluss ist dabei eine gute Zugentlastung der in den Durchgangsöffnungen 4 später festgeklemmten Kabel und/oder Schläuche möglich.

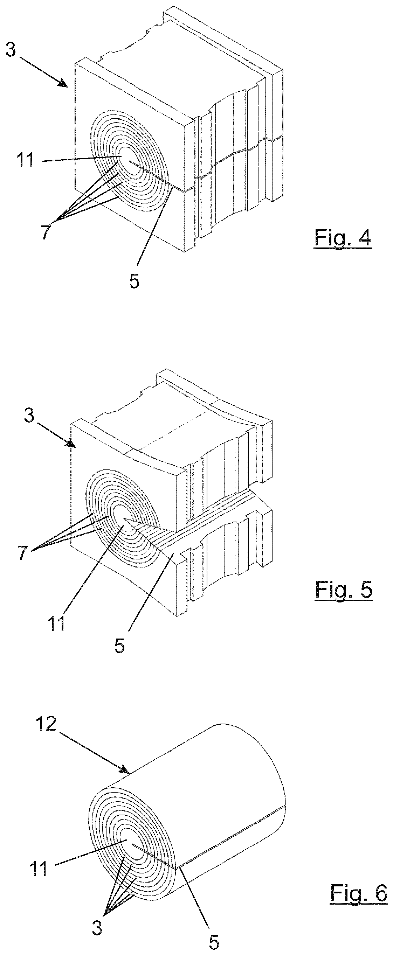

Um die Durchgangsöffnung 4, welche prinzipiell auch mit einem Blindstopfen 11 (vgl. Figur 4) versehen sein kann, an verschiedene Durchmesser des Kabels oder Schlauchs einfach anpassen zu können, ist die Durchgangsöffnung 4, wie es in der Darstellung der Figur 3 zu erkennen ist, von mehreren zylindermantelförmigen Materialschichten 7 umgeben. Diese Materialschichten 7 folgen in Form von konzentrischen Ringen aufeinander. Beim Einsatz der Dichttülle 3 muss nun entsprechend dem Durchmesser des Kabels oder Schlauchs von innen her eine oder mehrere der Materialschichten 7 entfernt werden, sodass die Durchgangsöffnung 4 diejenige Größe bekommt, welche zur abdichtenden und zugentlastenden Aufnahme des Kabels oder des Schlauchs am besten geeignet ist. Damit die einzelnen Materialschichten 7 dabei zuverlässig in der Dichttülle 3 gehalten werden sind diese auf einer Vorderseite und einer Rückseite 8, 9, welche in der Darstellung der Figur 3 entsprechend rechts und links angeordnet ist, mit einer dünnen Materialschicht 10 überzogen, welche die einzelnen Materialschichten 7 entsprechend fixiert und gleichzeitig eine abgeschlossene äußere Optik schafft, wie es in den Darstellungen der Figuren 1 und 2 zu erkennen ist. Hierdurch werden Materialeinlagerungen zwischen den einzelnen Materialschichten 7 zuverlässig verhindert.

Prinzipiell kann auf diese dünne Schicht 10 jedoch auch verzichtet werden. Sie kann auch bei den nachfolgenden Ausführungsbeispielen weiterhin vorhanden sein, ist dort jedoch zur besseren Darstellung des Aufbaus der Materialschichten 7 nicht nochmals eingezeichnet.

Dementsprechend ist in der Darstellung der Figur 4 an der dort dargestellten Tülle 3 der Aufbau aus den einzelnen konzentrischen Materialschichten 7 sehr gut zu erkennen. Wie oben bereits angesprochen kann die Durchgangsöffnung 4 der Dichttüllen 3 auch einen Blindstopfen aufweisen. Ein solcher Blindstopfen 11 ist hier im Zentrum der einzelnen zylindermantelförmigen Materialschichten 7 schematisch angedeutet. Auch er ist wie jede einzelne der Materialschichten 7 und die Tülle 3 an sich über den Schlitz 5, welcher bis zum Zentrum der Durchgangsöffnung 4 bzw. späteren hier durch den Blindstopfen 11 verschlossenen Durchgangsöffnung 4 läuft, teilweise eingeschnitten. Er wird vergleichbar, wie die Materialschichten 7 entfernt, sobald ein Kabel oder ein Schlauch eingelegt werden soll.

Die einzelnen Materialschichten 7 lassen sich dabei insbesondere durch Extrudieren herstellen. Dies kann unmittelbar im Bereich der Dichttülle 3 erfolgen, sodass diese aus demselben Material in einem Herstellungsschritt hergestellt werden und je nachdem, ob diese lediglich aneinander anliegen oder durch die hier nicht dargestellte dünne Schicht 10 auch miteinander verbunden sind, zu einem einstückigen Aufbau führen. Um die Materialschichten 7 einfacher beispielsweise durch Extrusion herstellen bzw. Spritzen zu können kann der Aufbau der Dichttülle 3 auch so realisiert werden, dass dieser in einem leicht geöffneten Zustand des Schlitzes 5 hergestellt wird. Dies ist in der Darstellung der Figur 5 gezeigt. Erst nach dem Verpressen der Dichttülle 3 in dem Rahmen 2 wird diese dann in die beispielsweise in der Darstellung der Figur 4 erkennbare Form gedrückt und damit zuverlässig abgedichtet.

Der die einzelnen Materialschichten 7 sowie gegebenenfalls den Blindstopfen 11 umfassende Kern, welcher in der Darstellung der Figur 6 mit 12 bezeichnet ist, lässt sich im Prinzip auch unabhängig vom Rest der Dichttülle 3 herstellen. Er kann dann in eine vorhandene Durchgangsöffnung einer bestehenden Dichttülle eingebracht werden. Dies kann beispielsweise durch ein Einkleben des Kerns 12 aus der Darstellung der Figur 4 in eine Dichttülle 3 mit größerer Durchgangsöffnung 4 erfolgen, wobei idealerweise der Außendurchmesser des Kerns 12 und der Innendurchmesser der Durchgangsöffnung aufeinander abgestimmt sind. Insbesondere kann der Außendurchmesser des Kerns minimal größer als der Innendurchmesser der Durchgangsöffnung sein, um ein sehr gutes Verpressen bzw. Abdichten beim Verschließen des Rahmens zu erreichen. Damit wird dann eine Dichttülle 3 erreicht, wie sie beispielsweise in der Darstellung der Figur 4 zu erkennen ist, und welche typischerweise keine dünnen Schichten 10 auf ihren Seitenflächen 8, 9 aufweist, welche über die Materialschichten 7 des eingeklebten Kerns 12 verlaufen.

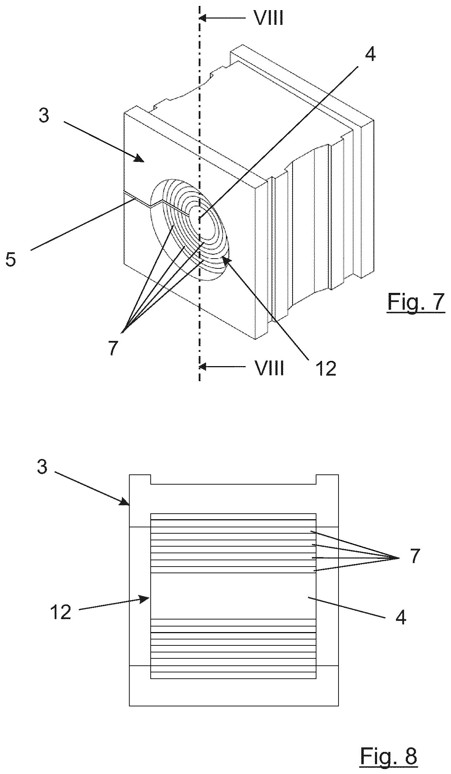

In der Darstellung der Figur 7 und im Schnitt dazu gehörigen Figur 8 ist ein Aufbau gezeigt, bei welchem der Kern 12, hier wieder ohne einen Blindstopfen 11 in der Durchgangsöffnung 4, so ausgestaltet ist, dass er formschlüssig in dem Material der Dichttülle 3 aufgenommen ist. Dies kann beispielsweise durch späteres Einlegen, insbesondere aber durch Umspritzen des Kerns 12 mit dem Material der Tülle 3 erreicht werden. Je nach Ausgestaltung kann hier auch wieder die hier nicht dargestellte dünne Schicht 10 auf einer oder beiden Seiten der Tülle 3 entsprechend vorgesehen werden.

Zusätzlich ist hier ein Versatz des Kerns und damit der einzelnen Materialschichten 7 in axialer Richtung der Durchgangsöffnung 4 nach innen erkennbar, sodass also der Kern 12 eine kürzere axiale Länge aufweist als die Tülle 3 selbst. Ein solcher axial kürzerer Kern 12 kann in der Tülle 3 beidseitig gehalten werden. Es kommt somit zu einer besseren Zugentlastung zwischen dem Kern 12 und der Tülle 13. Der Überstand zwischen der Tülle 3 und dem Kern 12 dichtet außerdem den umfangsseitigen Übergang zwischen der Tülle 3 und dem Kern 12 zusätzlich ab.

## Patentansprüche

1. Durchführung (1) für einen länglichen Gegenstand, mit einem Rahmen (2) und wenigstens einer Dichttülle (3), wobei eine Außenkontur der Dichttülle (3) Elemente zur formschlüssigen Anlage an dem Rahmen (2) und/oder einer benachbarten Dichttülle (3) aufweist, wobei die Dichttülle (3) wenigstens eine Durchgangsöffnung (4) zur Aufnahme des länglichen Gegenstandes oder einem Blindstopfen aufweist, und wobei in der Durchgangsöffnung (4) mehrere zylindermantelförmige Materialschichten (7) konzentrisch zueinander angeordnet sind,
**dadurch gekennzeichnet, dass**
der Rahmen (2) quer zur Laufrichtung des länglichen Gegenstades teilbar ausgebildet ist, und dass die Dichttülle (3) und die zylindermantelförmigen Materialschichten (7) geschlitzt ausgeführt sind, sodass ein Schlitz (5) jede der Durchgangsöffnungen (4) mit einer benachbarten Durchgangsöffnung (4) oder der Außenkontur verbindet.

2. Durchführung (1) nach Anspruch 1,
**dadurch gekennzeichnet, dass**
der Rahmen (2) und die Elemente zur formschlüssigen Anlage der wenigstens einen Dichttülle (3) so ausgebildet sind, dass die wenigstens eine Dichttülle (3) bei geteiltem Rahmen (2) quer zur Laufrichtung des länglichen Gegenstades schubladenartig mit ihren Elementen zur formschlüssigen Anlage in korrespondierende Elemente des Rahmens (2) einschiebbar ist.

3. Durchführung (1) nach Anspruch 1 oder 2,
**dadurch gekennzeichnet, dass**
die zylindermantelförmigen Materialschichten (7) als Teil der Dichttülle (3) ausgebildet sind.

4. Durchführung (1) nach einem der Ansprüche 1 oder 2,
**dadurch gekennzeichnet, dass**
die zylindermantelförmigen Schichten (7) als eigenständiger Kern (12) mit zylindrischem Außendurchmesser ausgebildet und in die Durchgangsöffnung (4) der Dichttülle eingelegt sind.

5. Durchführung (1) nach Anspruch 4,
**dadurch gekennzeichnet, dass**
der eigenständige Kern (12) eingeklebt und/oder von dem Material der Dichttülle (3) umspritzt ausgebildet ist.

6. Durchführung (1) nach Anspruch 4,
**dadurch gekennzeichnet, dass**
der eigenständige Kern (12) formschlüssig in der Dichttülle (3) gehalten ist.

7. Durchführung (1) nach einem der Ansprüche 1 bis 6,
**dadurch gekennzeichnet, dass**
die zylindermantelförmigen Materialschichten (7) auf zumindest einer ihrer Seiten (8, 9) in Axialrichtung der Durchgangsöffnung mit einer dünnen Schicht (10) des Materials der Dichttülle (3) überzogen sind.

8. Durchführung (1) nach Anspruch 7,
**dadurch gekennzeichnet, dass**
die zylindermantelförmigen Materialschichten (7) auf beiden Seiten (8, 9) in axialer Richtung der Durchgangsöffnung mit der dünnen Schicht (10) überzogen sind.

9. Durchführung (1) nach einem der Ansprüche 1 bis 8,
**dadurch gekennzeichnet, dass**
die Dichttülle (3) eine im Wesentlichen rechteckige Form aufweist, wobei die Elemente zur formschlüssigen Aufnahme in dem Rahmen (2) an zwei gegenüberliegenden Seiten angeordnet sind.

10. Durchführung (1) nach einem der Ansprüche 1 bis 9,
**dadurch gekennzeichnet, dass**
zumindest die zylindermantelförmigen Materialschichten (7) aus einem elastischen Material extrudiert sind.

11. Durchführung (1) nach einem der Ansprüche 1 bis 10,
**dadurch gekennzeichnet, dass**
ein Blindstopfen (11) zusammen mit den zylindermantelförmigen Materialschichten (7) in deren Zentrum hergestellt und/oder angeordnet ist.
